**Europäisches Patentamt**

**European Patent Office**

**Office européen des brevets**

(19)

(11) Publication number: **0 193 305**
**A2**

# (12) EUROPEAN PATENT APPLICATION

(21) Application number: **86300942.9**

(22) Date of filing: **12.02.86**

(51) Int. Cl.⁴: **G 06 F 13/12**
**H 04 L 11/16**

(30) Priority: **13.02.85 US 701586**
**13.02.85 US 701588**
**13.02.85 US 701594**
**13.02.85 US 701595**
**13.02.85 US 701596**

(43) Date of publication of application:
**03.09.86 Bulletin 86/36**

(84) Designated Contracting States:
**DE FR GB NL**

(71) Applicant: **TEXAS INSTRUMENTS INCORPORATED**
**13500 North Central Expressway**
**Dallas Texas 75265(US)**

(72) Inventor: **Vanaken, Jerry R.**
**13563 Fernhill**
**Sugarland, TX 77478(US)**

(72) Inventor: **Killebrew, Carrell R.**
**3034 Pasture Lane**
**Sugarland, TX 77479(US)**

(72) Inventor: **Patrick, Michael W.**
**7520 Cook Road No. 1907**
**Houston, TX 77072(US)**

(72) Inventor: **Walters, Donald M.**
**6010 Elm, Apt. No. 991**
**Houston, TX 77081(US)**

(72) Inventor: **Shore, Brian K.**
**18 Rotten Row**
**Risely, Bedford MK4 4EJ(GB)**

(74) Representative: **Abbott, David John et al,**
**Abel & Imray Northumberland House 303-306 High**
**Holborn**
**London, WC1V 7LH(GB)**

(54) **System interface for coupling standard microprocessor to a communications adapter.**

(57) A communications system of the token-passing, closed-loop type for use as a local area network employs an adapter at each station for coupling a hose processor to a one-way signal path. The host processor includes a host CPU, a main memory, and a system bus. The adapter is coupled to the main memory by the system bus, and includes a local CPU, a local read/write memory, and a local bus. To transmit a message from one station to another, a frame of data is created in the main memory by the hose CPU, and this frame is copied into the local read/write memory by way of the system and local bus, when initiated by the hose CPU. A transmit/receive handler is coupled to the local bus to directly access the local read/write memory. When this station has access to the loop, i.e., receives a free token, the transmit/receive handler copies the message frame from the local read/write memory to the outgoing signal path, via a transmit stack, converting from parallel to serial. When the adapter receives a message addressed to this station, it is converted from serial to parallel, and copied into the local read/write memory via a receive stack and the local bus, interrupting the local CPU. The message frame is then copied from the local read/write memory to the main memory via the system interface. The local CPU executes instructions fetched from a ROM accessed by the local bus, so the instruction fetch for the local CPU, the direct memory access from the transmit/receive handler for transmitting or receiving data frames, and the access from the hose CPU for copying transmitted or received message frames, all contend for the local bus, using bus arbitration with appropriate priorities.

./...

*Fig.2*

SYSTEM INTERFACE FOR COUPLING STANDARD MICROPROCESSORS
TO A COMMUNICATIONS ADAPTOR

\* \* \* \* \*

BACKGROUND OF THE INVENTION:

This invention relates to digital systems of the type used in loop communications systems, and more particularly to construction of an adapter for coupling a host processor to a data communications loop, in which the adapter contains a local processor and local bus.

The token-ring local area network is a closed-ring data communications system functioning to transfer data among a number of stations coupled to a one-way signal path. Each station has a host processor with memory and various peripheral devices to function as an independent workstation. Access to the ring is controlled by token passing wherein a free or busy token is passed from one station to the next around the ring. An early example of a token ring is shown in U.S. Patent 3,597,549 issued to Farmer & Newhall and assigned to Bell Telephone Laboratories. In further refinement, the so-called Munich ring has evolved from developments by IBM, reported at Proceedings of the National Telecommunications Conference, Nov. 1981, pp. A.2.2.1-A.2.2.6. Standard protocols for these communications methods have been published by the IEEE as the 802.5 token ring proposal.

The present invention, when used in the local area network system, is concerned with the structure of an adapter for connection between the host processor and the signal path of the ring. The adapter must operate relatively independent of the CPU of the host processor so that a minimum of interference with the functions of the host CPU is needed. The adapter must accommodate a variety of different types of host CPU, so that a special adapter need not be manufactured for each different type of construction of the workstations. It is expected that entire office buildings or manufacturing facilities will be permanently wired to implement loop communications of this type between all computer terminals, word processors, telephones, bulk data storage stations, and the like. Thus, the adapters must be of relatively low cost, must be reliable and require little maintenance, must be of small size and dissipate little power, and above all must interface with a variety of differing systems, while of course operating at data transfer rates compatible with the host CPU and the signal path.

It is the principal object of this invention to provide an improved data communications system, particularly an improved communications adapter for coupling a host processor system to a token passing communications loop. Another object is to provide an improved communications adapter which has processing and control facility independent of the host system and which operates with a variety of different host systems. A further object is to provide a low cost, low power, reliable and versatile communications adapter for token ring local area network systems or the like. An additional object is to provide a local bus structure for interfacing two different processor systems.

## BRIEF DESCRIPTION OF THE DRAWINGS

The novel features believed characteristic of the invention are set forth in the appended claims. The invention itself, however, as well as other features and advantages thereof, will be best understood by reference to the detailed description which follows, read in conjunction with the accompanying drawings, wherein:

Figure 1 is an electrical diagram in block form of a one way communications loop of the token-passing type which may employ a microprocessor device having features of the invention;

Figures 1a and 1b are timing diagrams of data frame formats used in the communications loop of Figure 1;

Figure 2 is an electrical block diagram of one of the stations in the communications loop of Figure 1, including a microprocessor CPU having features of the invention;

## DETAILED DESCRIPTION OF SPECIFIC EMBODIMENT

### TOKEN RING LOCAL AREA NETWORK SYSTEM

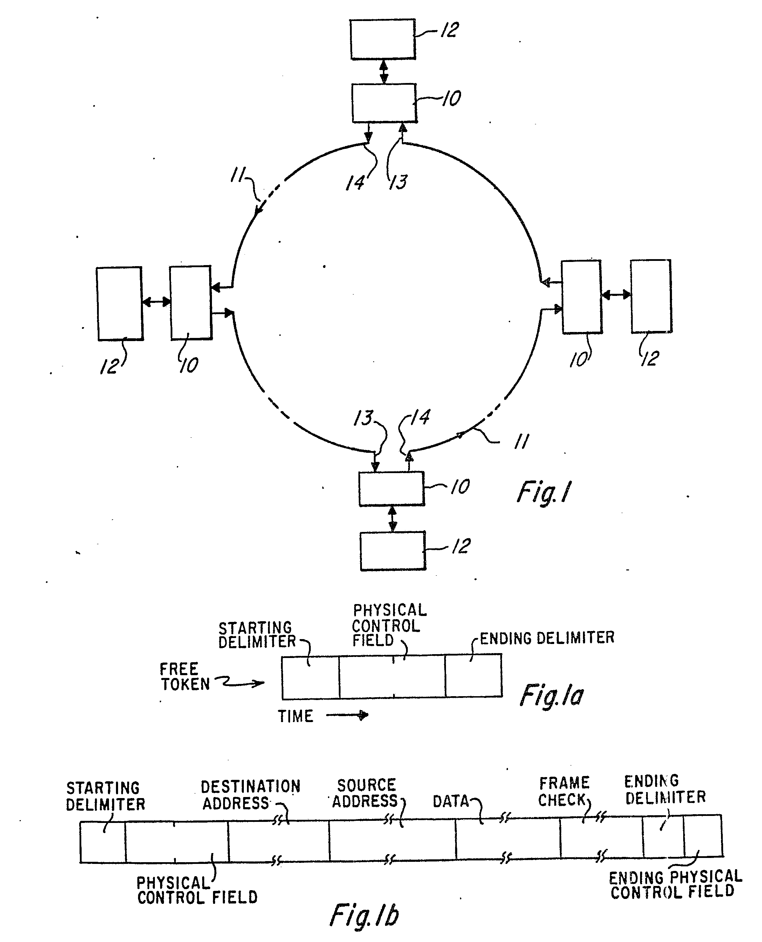

Referring to Fig. 1, a communications loop of the token ring type is illustrated. A plurality of nodes or stations 10 are interconnected by a one-way signal path 11. A host processor system 12 is connected to each station 10. Each one of these systems 12 may be a computer workstation with a CPU, keyboard, disk memory, CRT display, and printer, for example. Signals on the loop propagate in one direction, as indicated by arrows, either bit-serial as will be described herein, or byte-serial, depending upon the requirements of the system. The purpose of this communications loop is to provide high-speed data transfer between processing systems. There is no central or master station in the loop; instead the loop operates on a peer-to-peer basis.

The communiations loop of Fig. 1 is a local area

4

network interconnecting stations 10 within a single office building, a building complex, or a campus, with the length of the signal path 11 being no more than a few kilometers. Using twisted-pair conductors for the signal path 11, data rates of about one to ten Mb/sec. are possible, and up to one or two hundred stations 10 may be connected in a single loop.

A control scheme based upon token passing is used for granting access to the ring of Fig. 1. A unique bit sequence, called a token, is passed from one station to the next. If a station has no data to transmit, the token is simply passed on to the next node. A station having data to transmit to another station 10 in the loop waits until the token is received, changes the token from "free" to "busy" and retransmits it, and transmits its data. After this transmitting station receives the message back at its input, confirming that its message has propagated around the loop, it retransmits the free token.

The communications loop of Fig. 1 operates according to the IEEE 802.5 standard for token ring local area networks. This type of system is described by Dixon, Strole and Markov in IBM Systems Journal, Vo. 22, Nos. 1 and 2, 1983, pp. 47-62; also, the system is described by N.C. Strole in IBM J. Res. Develop, Vol. 27, No. 5, Sept. 1983, pp. 481-496.

Each of the stations 10 has the capability of receiving data from the signal path 11 at its input 13, and transmitting data at its output 14. The data is transmitted on the twisted-pair signal path in the format of differential Manchester encoding. The data consists of a sequence of 8-bit groups or octets as illustrated in Figs. 1a and 1b. A free token consists of a one-octet starting delimiter, a physical control field which is two octets long, followed by an ending delimiter, as seen in Fig. 1a. The physical control field contains priority codes which allow levels of priority in granting access, as well as the "token", which is 1 for busy and 0 for free. The starting and ending delimiters contain bits which are code violations in Manchester encoding so that the delimiters will not occur in any address or data fields.

A data frame is shown in Fig. 1b, and consists of a starting delimiter, a two-octet physical control field containing a busy token in this case. The next field is the destination address, six bytes in length; a single loop would need only one byte for a maximum of 256 stations 10, but provision is made in the protocol for a much larger number of unique addresses. A source address field of six bytes follows, representing the address of the transmitting station. The information field is next, and this field is of variable length, depending upon the number of bytes of data to be transmitted; an average message is perhaps two or three hundred bytes of ASCII code, but thousands of bytes may be sent in one frame. The data is followed by a four-octet frame check sequence which contains a CRC-code for checking the addresses and data for errors; the receiving station performs this check. The frame concludes in an ending delimiter, followed by a one-octet physical control field which contains bits modified by the receiving station as the frame passes through to indicate that the address was recognized and the frame was copied, and also whether errors were detected in the transmitted data.

A transmitting station does not reinsert the free token onto the loop until it has received the beginning of its transmitted frame back at its input. As soon as it has recognized the starting delimiter, physical control field, destination address, and source address, it transmits the free token and strips the remainder of its transmitted frame. Each of the stations 10 other than the transmitting and receiving stations merely passes the frame on, but does not copy it. A station 10 can perform the following operations on the data stream:

a) if the destination address is not that of the station, it retransmits the data frame without copying it;

b) if the destination address is that of the station, it retransmits the data frame and also copies it;

c) the station can change the state of single bits in the received data (such as token or physical control fields) before retransmitting;

d) a station can originate the transmission of data to another station;

e) the originating station removes or strips a message frame from the ring that this station has previously transmitted, after the message has gone all the way around the ring; this originating station retransmits a free token after it has passed on the starting delimiter, physical control field (including busy token), and addresses.

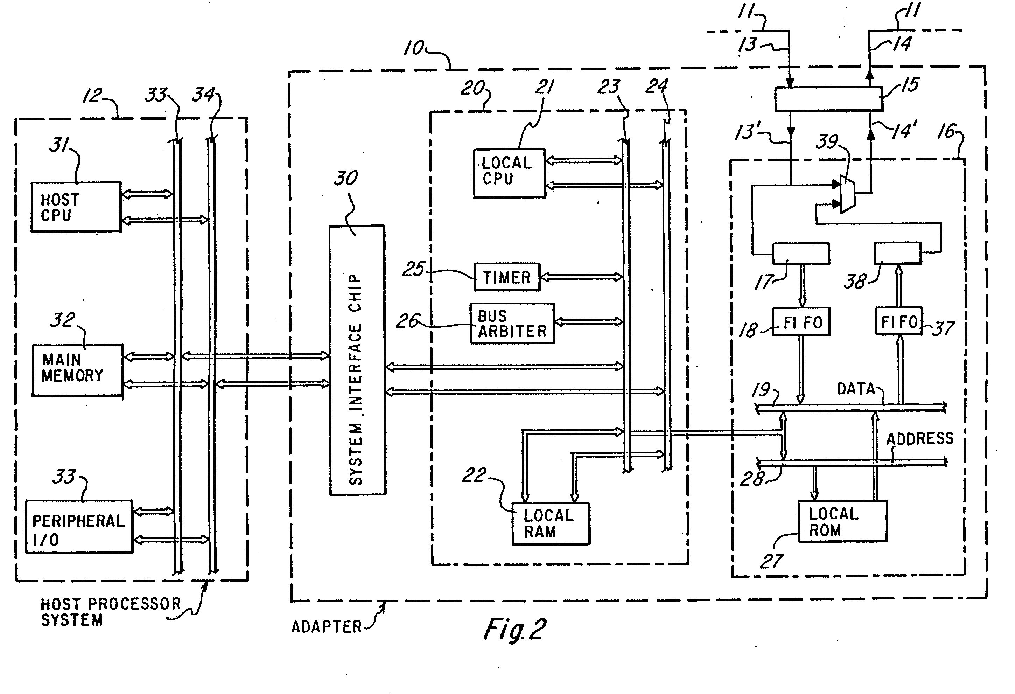

Referring to Fig. 2, each of the stations 10 includes a ring interface 15 which converts the incoming signal on line 13 to the voltage level for internal processing, and recovers the signal clock $\phi$s from the loop signals. The ring interface also produces the outgoing signal on the output line 14 at the proper voltage/current level, based upon a transmit signal on line 14'. The incoming serial data on line 13' applied to a protocol handler device 16 which is a single-chip integrated circuit which implements the functions (a)-(f) listed above. The serial data is converted to parallel data in a register 17, and if the data is to be copied to parallel data in a register 17, and if the data is to be copied the bytes of incoming data are coupled by a FIFO bufer 18 to a data bus 19.

7

A message processor chip 20, another single-chip integrated circuit containing a local CPU 21 and a local RAM memory 22, receives the incoming data by DMA to RAM22 via local address/data bus 23 and local control bus 24. The message processor also contains a general purpose timer 25 and a bus arbitrator 26, both coupled to the local bus 23 and control bus 24. The programming for the local CPU 21 of the message processor 20 is contained within a ROM 27 which is accessed by address bus 28 and data bus 19, extensions of the local bus 23; the ROM 27 is located on the protocol handler chip 16.

The incoming data, copied into the local RAM 22 by DMA, is then copied into the host processor 12 by DMA through a system interface chip 30, which is another single-chip integrated circuit.

The host processor 12 contains the host CPU 31, a main memory 32, and various peripheral devices 33 which would couple to the CRT, keyboard, disk drive, etc. A main address/data bus 34, and control bus 35, interconnect these elements. The host CPU 31 may be a part number 68000, or a 8086 device, as the interface device 30 accomodates the control and data formats of either.

The host processor 12 sends a message to another host processor 12 of the communications loop by first forming a message frame in its RAM 32 with destination address, its own address, and the bytes of data to be sent as the message. This frame is copied into the local RAM 22 by DMA (or memory mapped I/O) through the system interface 30 and local bus 23. The message frame stays in the local RAM 22 until a free token is received and recognized by a decoder 36 in the protocol handler 16; when this occurs controllers in the protocol handler begin to fetch the frame from the local RAM 22 by DMA through local bus 23, data bus 29, and a FIFO 37, from which the data is serialized in a shift register 38 and goes out through a

8

multiplex 39 to the output line 14'.

If the incoming data on the line 13' is not to be copied in this station, it does not reach the busses 29 or 23, nor the local RAM memory 22, but instead is applied through multiplexer 39 to the line 14'.

THE LOCAL CPU

Microprocessor devices with internal test of the invention  to be described herein may be of  various configurations; in this embodiment the microprocessor device takes the form of the chip 20 containing the local CPU 21 used in  the system shown in Figure 2.

The microprocessor device 20 is a single-chip MOS/LSI device having the local CPU or  central processing unit 21 as will be described in detail, along with local a read/write static random access memory 22. The CPU 21 and memory 22 communicate with one another by a 16-bit, parallel, bidirectional, multiplexed, address/data bus 23, along with the control bus 24. Suitable supply voltage and clock terminals are included; for example the device may employ a single +5V Vcc supply and ground or Vss, and a crystal may be connected to terminals of the device to control the frequency of an on-chip oscillator which will then define the local  timing. It is understood that concepts of the invention may  be used in  various single-chip microcomputer or micrporocessor devices with on-chip memory or off-chip memory, as well as in a microprocessor having separate address and data busses instead of the bidirectional bus 23.

In general terms, the local CPU 21 of Figure 2 functions in traditional manner. The CPU 21 fetches an instruction by sending out an address on the bus 23 and bus 28  to the ROM memory 27 then receiving the instructon via the bus 19 and bus 23  from the addressed location in

9

the ROM memory. The CPU 21 then executes this instruction, which usually requires several machine cycles (as defined by the clock or crystal) including sending out via bus 23 addresses for the operands stored in the RAM memory 22, and receiving this data back on bus 23, as well as writing a result into RAM memory 22 by applying an address followed by data in successive cycles on the bus 23.

In the example to be described in detail, a 15-bit address is applied to the bus 23 from the CPU 21 (the 16th bit is hardwired 0 for addressing), which will directly address 64K bytes or 32K words of memory in the RAM 22 and ROM 27 as seen in the memory map of Fig. 2b. Each 16-bit word in memory includes two 8-bit bytes, so the CPU addresses 64K bytes.

Definitions of the functions of the control lines 24, the status bits for a sixteen bit status register ST, and interrupt levels are similar to Tables of U.S. Pat. 4,402,044, incorporated herein by reference. Of course, this specific microprocessor is merely illustrative of contemporary microprocessors or microcomputers in which features of the invention may be used.

The CPU 21 of Figure 2 executes the instruction set described in Patent 4,402,044 although it is understood that other instructions could be defined for execution in addition to or in place of the particular ones described. Most of the instruction set

10

is the same as that of a microprocessor sold by Texas Instruments under the part number TMS9900 and described in a book entitled "9900 Family Systems Design", published in 1978 by Texas Instruments Incorporated, P.O. Box 1443, M/S 6404, Houston, Texas 77001, Library of Congress Catalog No. 78-058005; such book is incorporated herein by reference.

BUS ARBITRATION

The bus arbiter 26 in the chip 20 is provided to allow the protocol handler chip 16, the system interface chip 30, or another external DMA device to arbitrate for control of the local bus 23. Immediately following system reset by SRESET-, the CPU 21 of chip 20 has control of the bus 23, but the chip 16 and the chip 30 can request and gain control of the bus 23 to perform DMA transfers. Following completion of the DMA cycle or cycles, bus

11

control is returned to the chip 20. In order to maintain maximum utilization of the bandwidth of the local bus 23, the request and grant sequences for future bus cycles are overlapped with the bus cycle currently in progress.

Arbitration and control of the local bus 23 of the arbiter 26 is coordinated by a bus-request/bus-grant handshake using the LBRQ1-, LBGR1, and LBRQ2, LBGR2- handshake pairs on the chip 20, as illustrated in Figures Xa and Xb. The LBRQ1- input from the chip 16 has priority over the LBRQ2- input from the system interface chip 30.

The external bus master (chip 16 or chip 30) asserts LBRQ1- or LBRQ2- to request the bus, and the arbiter 26 responds to the bus request by asserting LBGR1- or LBGR2-, then floating the address/data, LEN-, LAL, LI/D-, LR/W- lines from the chip 20 at the completion of the bus cycle.

In order of priority, the masters of the local bus 23, as determined by the arbiter 26, are:

(1) External master on LBRQ1-, the protocol handler chip 16;

(2) External master on LBRQ2-, the system interface chip 30;

(3) Internal master from the CPU 21 for microprocessor instruction and data access.

Within the system interface chip 30, the memory-mapped I/O bus controller has priority over the system DMA bus controller.

It is possible that a higher priority bus master may request the local bus 23 while one of the external bus masters has control. That is, the protocol handler chip 16 may request the bus 23 while the system interface chip 30 has control. This could occur when an incoming message is detected at a time when an outgoing message frame is being copied from memory 32 to memory 22 by DMA. In this case, the following occurs:

12

(1) the bus arbiter 26 deasserts LBGR2- in Q3 of the current bus cycle;

(2) the system interface chip 30 completes the current cycle (possibly with wait states), and tristates its bus signals, leaving LBRQ2- asserted during this time;

(3) LBGR1- is asserted;

(4) when the higher priority master, chip 16, has accomplished its DMA task, such as copying an incoming message frame into the RAM 22, it deasserts LBRQ1-, and the bus arbiter 26 then reasserts LBGR2-;

(5) the system interface chip 30 then reassumes control of the bus 23, and completes copying the outgoing data frame.

SYSTEM INTERFACE CHIP

Referring to Fig. 2, the system interface chip 30 implements two complete bus interfaces, one to the system data bus 34 (and its control bus 35), and the other to the local address/data bus 23. The input and output pins of the chip 30 are described in Table F. Of course, some of the pins are the same as in Table E since some go to the chip 20.

The chip 30 contains two separate controllers. First, a memory-mapped I/O controller with the MMIO register which manages the references by the host system 12 (the host CPU 31) to the memory-mapped registers presented by the adapter 10. The second is a DMA controller which performs DMA transfers between the host system bus 34 and the adapter's local bus 23. With these mechanisms, a variety of different logical interfaces between the host system 12 and the adapter 10 may be implemented with the code executed in local CPU 21 (code stored in ROM 27). The terms memory-mapped I/O and system DMA refer to the data transfer mechanisms as seen from the host system 12 side. This is different from registers in the memory space of local bus 23 on the local side of the chip 30.

For memory-mapped I/O, the adapter 10 appears to the host system 12 as a set of eight consecutive byte addresses. Two registers are dedicated to bit-level status and control information; the program code in ROM 27 executed by the CPU 21 defines the meaning of these bits. The memory-mapped I/O unit 61 also maintains an address register into the local data space of the adapter 10, and the host system 12 may indirectly access any RAM 22 or ROM 27 byte in the memory on the local bus. During system 12 or CPU 31 reads or writes to local memory 22 or the local data space, the CPU 21 is locked out of the local RAM 22. With this approach, command and status task blocks may be written by the host CPU 31 and asynchronously examined by the CPU 21. The memory-mapped I/O unit also places a programmable interrupt vector on the system bus 34 during system bus interrupt acknowledge cycles.

The system interface chip 30 also allows for the local CPU 21 to initiate direct memory access between the on-chip RAM 22 and the system memory 32, for incoming frame data or command/status interchange. This DMA is completely under control of the program for CPU 21 stored in the ROM 27.

SYSTEM TRANSMIT

To transmit a message, the host system 12 first creates a data frame in its memory 32, under control of the host CPU 31. Then, the CPU 31 writes to the MMIO register of system interface chip 30, which causes an interrupt of the CPU 21, and indicates in the MMIO register the starting address on the system bus 34 of the data frame.

14

The CPU 21 then sets up a system DMA for system-to-local transfer. This is accomplished by executing program code from the ROM 27 starting at the vector address used for the interrupt. The CPU 21 sets up the following registers: LDMA ADR to contain the system bus 34 address for the data frame; SDMA ADR to contain the local RAM 22 address via local address/data bus 23 for the frame; a SDMA CTL control bit is set to start; SDMA LEN gives the length of the frame. A system DMA through the chip 30 then transfers the data frame from the system RAM memory 32 to the local RAM 22, using a FIFO in the chip 30 so that transfers of data words from the bus 34 to the FIFO are under control of the system control 64 in the chip 30 and synched to the system clock SBCLK, while transfers from the FIFO to the local RAM 22 via bus 23 are under control of the DMA controller in the chip 30 and synched to the local bus clock LBCLK. A cycle on the system control side, if the FIFO is not full, is as follows: the system side controller requests the system bus 34; the host system 12 sends a bus grant to the chip 30; a word (or byte) of data is sent from the system memory 32 into the FIFO; SDMA LEN register is decremented. These cycles continue until the SDMA LEN register is zero, or until the SBERR system bus error pin is asserted, or the DMAHALT bit of the SIFCTL register is set. A cycle on the local control side, if there is data in the FIFO , is: the local side controller requests the local bus 23 by a LBRQ1- signal; the LBGR1 is asserted by the chip 20; one word of data is written into the local RAM 22 from the FIFO.

When the entire frame has been copied from the RAM 32 to the RAM 22 in this manner, the system interface chip 30 again interrupts the CPU 21 to indicate that the DMA is complete. The CPU 21 can then operate on the data in local RAM 22 for checking, reformatting, encrypting, etc. When ready to transmit, the CPU 21 sets up the chip 16 for transmit by writing the local starting address and length of the data frame into two registers of the chip 16. The control of transmit now switches to the chip 16. First the transmit FIFO 37 is filled by DMA from chip 16 into RAM 22 of chip 20, using LBRQ2- and LBGR2- controls. The chip 16 then waits for a free token on the input 13 and 13' from the signal line 11. When a free token comes in, the chip 16 changes it to a busy token (sets bit to one), and starts sending data from the FIFO 37 through seriallizing register 38 and multiplexer 39 to the output 14' and 14. Whenever the FIFO 37 is not full, the chip 16 asserts a request for the local bus by line LBRQ2- and when it gets a LBGR2- from the bus arbiter 26 of the chip 20, a word of data is read from the local RAM 22 to the FIFO 37; the length register is decremented for each word transmitted; this continues until the length register is zero.

The data rate on the ring 11 may be about four M-bit per second or 0.5 M-byte per second, in a typical example. The tranfer rate from the local RAM 22 to the FIFO 37 is at a maximum rate defined by the local bus clock or the cycle time of the CPU 21, which is about 333 nsec, for example, meaning 16-bits are transferred every 333 nsec, which is six M-bytes per sec. Thus, the FIFO 37 can be kept filled during this transfer using only about 0.5/6 or one-twelfth of the cycles of the CPU 21. So the CPU 21 can be doing other operations, merely loosing a cycle now and then for the data transfer to the chip 16 for transmit. Likewise, the host system 12 typically has a system clock of 8-MHz, providing a data transfer rate on the system bus 34 of two M-byte per sec, which is four times that on the signal line 11. Thus, the DMA to transfer the frame from the system RAM 32 to the local RAM 22 is at a higher rate than the off-loading transfer from RAM 22 to the FIFO 37 in chip 16 for transmitting. Accordingly, it is possible to interleave DMA from host system 12 to local RAM 22 with DAM by chip 16 to local RAM 22, although this would not be necessary in most of the transmit operations.

16

## TABLE A

### PIN DEFINITIONS FOR MESSAGE PROCESSOR CHIP

| PIN | FUNCTION |
|---|---|
| LAL | Address Latch for Local Bus. When LAL goes active (high) the address appearing on the address/data bus is latched. LAL can originate either within the chip 20 or from external to the chip 20. |
| LEN- | Data Enable for Local Bus. When LEN- goes active-low, the data is valid on the local address/data bus 23. |
| LI/D- | Instruction or Data on Local Bus. When high, LI/D- indicates that an instruction fetch is in progress. When low, a data fetch is in progress. Can be used to select between ROM 27 and RAM 22. |
| LR/W- | Read or Write for Local Bus. When high, LR/W- indicates that a read cycle is being implemented. When low, a write cycle is being implemented. |
| LNMI- | Non-Maskable Interrupt for Local Bus. When this goes active-low, the CPU 21 executes a non-maskable interrrupt, jumping to a vector address. |
| LIRQ | Interrupt Request for Local Bus. Three pins. Contain the incoming interrupt code to define the interrupt level. |
| LBRDY | Local Bus Ready. External devices introduce wait states by holding LBRDY low. The CPU 21 continues wait states until LBRDY goes high. |
| LBRQ1- LBRQ2- | Local Bus Request 1 and 2. These inputs to chip 20 are driven active-low by the protocol handler chip 16 and the system interface chip 30, respectively, to request control of the local bus 23. LBRQ1- has priority over LBRQ2-. The local bus arbiter 26 of the chip 20 samples both signals at a given clock phase, and asserts either LBGR1- or LBGR2- on the next phase. |
| LBGR1- LBGR2 | Local Bus Grant 1 and 2. These outputs from the chip 20 are driven active-low by the local bus arbiter 26 of the chip 20 in response to a bus request LBRQ1- or LBRQ2-, respectively. It indicates that the requesting device 16 or 20 may use the following cycle, if LBRDY is also asserted (high). |

TABLE B

PIN DEFINITION FOR SYSTEM INTERFACE CHIP

| PIN | FUNCTION |
|---|---|
| SI/M- | System Mode select. This input pin, if held high, at I-mode, causes the chip 30 to be compatable with an 8086 or 8088 microprocessor chip 31. If held low, at M-mode, SI/M- causes the chip 30 to operate in a format compatable with a 68000 microprocessor chip 31. |
| S8/16- | System 8/16-bit bus select. If held low, an interface mode with a 16-bit data bus 34 is selected (the 8086 device). If held high, an 8-bit data bus 34 is selected (for 8088 device, for example). |
| SRSET | System Reset. This input pin places the entire adapter 10 in a known initial state. The chip 30 passes this signal through to the chip 20 via the LRESET- pin. |
| SCS- | System Chip Select. An input pin to chip 30 from the host CPU 31 functioning as chip select to allow the host processor 12 to execute a memory-mapped I/O to the chip 30 for read or write. |
| SRS0 SRS1 SRS2 | System Register Select. These three inputs to the chip 30 select the word or byte to be addressed during a memory-mapped I/O access from host CPU 31 to the chip 30. |
| SBHE-/SRNW | System Byte High Enable or Read/Not Write. In the I-mode (SI/M- =1) this pin serves as an active-low byte-high-enable signal SBHE-. In the M-mode (SI/M- =0), serves as a control signal which is high to indicate a read cycle and low to indicate a write cycle. The chip 30 drives this pin as an output during DMA onto the system bus 34; it is an input during memory-mapped I/O cycles from host CPU 31 to chip 30. |
| SWR-/SLDS | System Write Strobe or Lower Data Strobe. In I mode, this pin serves as the active-low write strobe. In M-mode, serves as the active-low lower data strobe. An input to chip 30 during memory-mapped I/O, and an output during DMA. |
| SRD-/SUDS | System Read Strobe or Upper Data Strobe indicator. In the I-mode, this pin is an active-low strobe indicating that a read cycle is performed on the system bus 34. In M-mode, an active-low strobe indicating that data is transferred on the most significant byte of the |

system bus 34. An input to chip 30 during memory-mapped I/O, and an output during DMA.

SRAS/SAS- System Register Address Strobe or Memory Address Strobe. In I-mode, this pin serves as the system register address strobe, by means of which SCS-, SRSO to SRS2, and SBHE- are latched. In I-mode, the SBHE- input is also latched. In a minimum-chip system, SRAS is typically tied to the ALE output of the host CPU 31. This latching capability is easily defeated, as is usually desired in expanded 8086/8088 systems supporting non-multiplexed address and data busses. The internal latch for these inputs remains transparent as long as SRAS remains high, permitting this pin to be strapped high and the signals at the SCS-, SBHE-, and SRSO to SRS2 inputs to be applied independent of an ALE strobe from the host CPU 31. In M-mode, this pin is an active-low address strobe, which is an input during memory-mapped I/O and an output during DMA.

SRDY-/ System Bus Ready or Data Transfer Acknowledge.
SDTACK- In I-mode, this pin serves as an active-low bus ready signal. In M-mode, this pin serves as the active-low data transfer acknowledge signal. The purpose of the SRDY- and SDTACK- signals is to indicate to the bus master that a data transfer is complete. SRDY-/SDTACK- is internally synchronized to SBCLK; it must be asserted before the falling edge of SBCLK in state T2 in order to prevent a wait state. SRDY- SDTACK- is an output when thesystem interface chip 30 is selected for memory-mapped I/O, and an input otherwise.

SALE System Address Latch Enable. At the start of each DMA cycle, this output from chip 30 provides the enable pulse used to externally latch the sixteen LSBs of the address from the multiplexed address/data lines.

SXAL System Extended Address Latch. This output provides the enable pulse used to latch (external to the chips 30) the eight address extension bits of the 24-bit system address during DMA. SXAL is activated prior to the first cycle of each block DMA transfer, and thereafter as necessary (whenever an increment of the DAM address counter causes a carry-out of the lower 16-bits).

SDIR System Data Direction. This output provides to the external data buffers a signal indicating the direction in which the data is moving. During memory-mapped I/O writes and DMA reads,

SDDIR is low (input mode); during MMIO reads and DMA writes, SDDIR is high (output mode), as follows:

| SDDIR | DIRECTION | MMIO | DMA |
|-------|-----------|-------|-------|
| 0 | input | write | read |
| 1 | output | read | write |

When the system interface chip 30 is not involved in a memory-mapped I/O or DMA operation, then SDDIR is high by default.

SDBEN-  System Data Bus enable. This output provides to data buffers in system 12 external to the chip 30, the active-low enable signal that causes them to leave the high-impedance state and begin transmitting data. This output is activated during both memory-mapped I/O and DMA.

SOWN-  System Bus Owned. This output goes active-low during DMA cycles to indicate to external devices that the chip 30 has control of the system bus. SOWN- drives the enable signal of the bus transceivers chips which drive the address and bus control signals.

SBCLK  System Bus Clock. This is the external clock signal with which the chip 30 synchronizes its bus timing for both memory-mapped I/O and DMA transfers.

SHRQ/
SBRQ-  System Hold Request or Bus Request. This output is used to request control of the system bus 34 in preparation for a DMA transfer. In I-mode, it is an active-high hold request, as defined in the standard 8086/8088 interface. In M-mode, it is an active-low bus request, as defined in the standard 68000 interface.

SHLDA/
SBGR-  System Hold Acknowledge or Bus Grant. In I-mode, this active-high pin indicates that the DMA hold request has been acknowledged, in accordance with the standard 8086/8088 interface. In M-mode, this pin is an active-low bus grant, as defined in the standard 68000 interface. In either mode, it is internally synchronized to SBCLLK.

SBBSY-  System Bus Busy. This input signal samples the value of the 68000-style Bus Grant Acknowledge (BGACK-) signal. The chip 30 must sample SBBSY- high before it drives the system bus 34. Its operation is defined for both I-mode and M-mode.

SBRLS-  System Bus Release. This input is driven active-low during DMA to indicate that a higher-priority device requires the system bus

34 and the chip 30 to release the bus as soon as possible. When the chip 30 is not performing DMA, this input is ignored. Its operation is defined for both I- and M-modes synchronized to SBCLK.

SINTR/   System Interrupt Request. The chip 30 activates
SIRQ-    this output to signal an interrupt request to
         the host processor 12. In I-mode, this pin is
         active-high; it is active-low in M-mode.

SIACK-   System Interrupt Acknowledge. This input is
         driven active-low by the host processor 12 to
         acknowledge the interrupt request from the chip
         30. The chip 30 responds to this signal by
         gating its interrupt vector onto the system bus
         34. System busses not requiring an interrupt
         cycle may strap SIACK- high.

SBERR-   Bus Error. This input is driven active-low
         during a DMA cycle to indicate to the chip 30
         that the cycle must be terminated abnormally. It
         corresponds to the Bus Error signal of the 68000
         microprocessor. It is internally synchronized to
         SBCLK. It is sampled in both I- and M-modes.

SADH     System Address/Data Bus (high byte). This is the
0 to 7   most significant byte of the 16-bit address/data
         bus 34. In I-mode, it is attached to the host
         system address/data bus 34 bits 15-8. In M-mode,
         it is attached to the host system address/data
         bus 34 bits 0-7 (using 68000 standard bit
         numbering conventions).

SADL     System Address/Data Bus (low byte). This is the
0 to 7   least significant byte of the 16-bit
         address/data bus. In I-mode, it is attached to
         the host system address/data bits 7-0 (using
         8086 standard bit numbering conventions.)

SPH      System Parity High. Contains an odd-parity bit
         for each data or addres byte transmitted over
         SADH 0 to 7.

SPL      System Parity Low. Contains an odd-parity bit
         for each data or address byte transmitted over
         SADL 0 to 7.

LBCLK1   Local Bus Clock 1 and Local Bus Clock 2. These
LBCLK2   signals are the input clock for all local bus
         transfers. LBCLK1 follows LBCLK2 by 90 degrees.

LAL      Local Address Latch Enable. At the beginning of
         each local bus cycle, LAL is driven high and
         then low to strobe the address local bus 23 on
         and into an external latch. The LAL signal is an
         output of the chip 30 when the chip 30 controls
         the local bus 23 and input to the chip 30
         otherwise.

CLAIMS:

1.  A digital data communications system comprising:

a) a signal path,

b) a plurality of stations connected to said signal path, each station receiving digital data from the path and transmitting digital data to said path, each said station comprising:

i) a main processor containing a main CPU, a main memory, and peripheral I/O devices, and having a system bus interconnecting said CPU, main memory, and peripheral I/O devices; the system bus including address/data bus means and a control bus;

ii) a communications processor containing a local CPU, a read-only memory, and a local read-write memory; said communications processor having a local multiplexed address/data bus and a local control bus interconnecting said local CPU, read-only memory, and local read/write memory;

iii) system interface means connecting said system bus to said local address/data bus and said local control bus whereby said main CPU initiates direct memory access to said local read/write memory and said local CPU initiates direct memory access to said main memory, each said direct memory access being under control of said system interface means,

iv) transmit/receive handler means having a data input coupled to said signal path and an output coupled via a receive buffer memory and said local bus to said local read/write memory, and having a data output coupled to said signal path and an input coupled via a transmit buffer memory and said local bus to said local read/write memory, said transmit/receive handler means responsive to initiation by transmit/receive control means to directly access said local read/write memory for writing received data from the receive buffer memory to the local read/write memory and reading transmit data from the local read/write memory to the transmit/receive bus buffer memory.

2. A system according to claim 1 wherein said signal path is a closed, one-way path, and each station receives data from an upstream direction in the path and transmits data to a downstream direction in the path.

3. A system according to claim 2 wherein said access to said signal path is controlled by a token included in the transmitted data and passed from station to station around the closed path.

4. A system according to claim 2 wherein data is transmitted on said signal path in bit-serial format, said transmit/receive handler means includes serial-to-parallel conversion means and parallel-to-serial conversion means, and wherein said local bus and system bus each includes a parallel bus.

5. A system according to claim 4 wherein a frame of a plurality of bytes of data to be transmitted is created in said main memory under control of said main CPU, and such frame is transferred by said system interface means upon initiation by said main CPU via said system bus and said local bus into said local read/write memory, and subsequently such frame is transferred by said transmit/receive handler means under initiation by said transmit/receive control means via said local bus and said transmit buffer memory to said transmitting means.

6. A system according to claim 5 wherein said frames of data created in said main memory and transmitted on said signal path by said stations include a destination address identifying a particular one of the stations, and a source address identifying the origination station.

7. A system according to claim 6 wherein said local CPU executes instructions fetched from said local read-only memory via said local bus, and said main CPU executes instructions fetched from said main memory via said system bus.

8. A data communications adapter connecting a processor system to a data communications signal path; said processor system having a system CPU, a system memory, a system control bus, and a system address/data bus; said adapter comprising:

a) a programmable processor device having a local CPU, a local memory, a local control bus, and a local multiplexed address/data bus connecting the local CPU and local memory; said local memory including read-only memory for storing program instructions executed by said local CPU and including read/write memory for temporarily storing message data;

b) a system interface device coupling said local address/data bus to said system address/data bus for transferring message data between said system memory and said local memory by direct memory access in both directions; the system interface device having inputs connected to said system control bus and to said local control bus;

c) a data communications interface device coupling said local bus to said signal path for transferring data between said signal path and said local memory by direct memory access in both directions;

d) wherein said data communications interface device, said system interface device, and said local CPU all contend for control of said local address/data bus.

9. An adapter according to claim 8 wherein said system interface device contains a memory-mapped I/O channel by which said system CPU accesses said local memory to transfer command and status information, and contains a direct memory access channel by which data is transferred between the system memory and the local memory under control of the system interface device after initiation of the transfer by the system CPU or the local CPU.

10. An adapter according to claim 8 wherein said data communications interface device includes a direct memory access channel by which data is transferred between said signal path and said local memory under control of the data communication interface device after initiation of the transfer by the local CPU or the data communications interface device.

11. An adapter according to claim 8 wherein said programmable processor device includes bus arbitration means to control access to said local bus, and said data communications interface device has highest priority of such access, said system interface device has the next higher priority of such access, and said local CPU has the lower priority of such access.

12. An adapter according to claim 8 wherein said system interface device contains a memory-mapped I/O channel by which said system CPU accesses said local memory to transfer command and status information, and contains a direct memory access channel by which data is transferred between the system memory and the local memory under control of the system interface device after initiation of the transfer by the system CPU or the local CPU; wherein said data communications interface device includes a direct memory access channel by which data is transferred between said signal path and said local memory under control of the data communication interface device after initiation of the transfer by the local CPU or the data communications interface device; and wherein said programmable processor device includes bus arbitration means to control access to said local bus, and said data communications interface device has highest priority of such access, said system interface device has the next higher priority of such access, and said local CPU has the lower priority of such access.

13. A digital data communications system comprising:

a) a signal path,

b) a plurality of stations connected to said signal path, each station receiving digital data from the path and transmitting digital data to said path, each said station comprising:

i) a main processor containing a main CPU, a main memory, and peripheral I/O devices, and having a system bus interconnecting said CPU, main memory, and peripheral I/O devices; the system bus including address/data bus means and a control bus;

ii) a communications processor containing a local CPU, a read-only memory, and a local read-write memory; said communications processor having a local multiplexed address/data bus and a local control bus interconnecting said local CPU, read-only memory, and local read/write memory;

iii) system interface means connecting said system bus to said local address/data bus and said local control bus whereby said main CPU initiates direct memory access to said local read/write memory and said local CPU initiates direct memory access to said main memory, each said direct memory access being under control of said system interface means,

iv) transmit/receive handler means having a data input coupled to said signal path and an output coupled via a receive buffer memory and said local bus to said local read/write memory, and having a data output coupled to said signal path and an input coupled via a transmit buffer memory and said local bus to said local read/write memory, said transmit/receive handler means responsive to initiation by transmit/receive control means to directly access said local read/write memory for writing received data from the receive buffer memory to the local read/write memory and reading transmit data from the local read/write memory to the transmit/receive bus buffer memory.

14. A system according to claim 13 wherein said signal path is a closed, one-way path, and each station receives data from an upstream direction in the path and transmits data to a downstream direction in the path.

15. A system according to claim 14 wherein said access to said signal path is controlled by a token included in the transmitted data and passed from station to station around the closed path.

16. A system according to claim 15 wherein data is transmitted on said signal path in bit-serial format, said transmit/receive handler means includes serial-to-parallel conversion means and parallel-to-serial conversion means, and wherein said local bus and system bus each includes a parallel bus.

17. A system according to claim 16 wherein a frame of a plurality of bytes of data to be transmitted is created in said main memory under control of said main CPU, and such frame is transferred by said system interface means upon initiation by said main CPU via said system bus and said local bus into said local read/write memory, and subsequently such frame is transferred by said transmit/receive handler means under initiation by said transmit/receive control means via said local bus and said transmit buffer memory to said transmitting means.

18. A system according to claim 17 wherein said frames of data created in said main memory and transmitted on said signal path by said stations include a destination address identifying a particular one of the stations, and a source address identifying the origination station.

19. A system according to claim 18 wherein said local CPU executes instructions fetched from said local read-only memory via said local bus, and said main CPU executes instructions fetched from said main memory via said system bus.

20. A data communications adapter connecting a processor system to a data communications signal path; said processor system having a system CPU, a system memory, a system control bus, and a system address/data bus; said adapter comprising:

a) a programmable processor device having a local CPU, a local memory, a local control bus, and a local multiplexed address/data bus connecting the local CPU and local memory; said local memory including read-only memory for storing program instructions executed by said local CPU and including read/write memory for temporarily storing message data;

b) a system interface device coupling said local address/data bus to said system address/data bus for transferring message data between said system memory and said local memory by direct memory access in both directions; the system interface device having inputs connected to said system control bus and to said local control bus;

c) a data communications interface device coupling said local bus to said signal path for transferring data between said signal path and said local memory by direct memory access in both directions;

d) wherein said data communications interface device, said system interface device, and said local CPU all contend for control of said local address/data bus.

21 An adapter according to claim 20 wherein said system interface device contains a memory-mapped I/O channel by which said system CPU accesses said local memory to transfer command and status information, and contains a direct memory access channel by which data is transferred between the system memory and the local memory under control of the system interface device after initiation of the transfer by the system CPU or the local CPU.

22. An adapter according to claim 21 wherein said data communications interface device includes a direct memory access channel by which data is transferred between said signal path and said local memory under control of the data communication interface device after initiation of the transfer by the local CPU or the data communications interface device.

23. An adapter according to claim 21 wherein said programmable processor device includes bus arbitration means to control access to said local bus, and said data communications interface device has highest priority of such access, said system interface device has the next higher priority of such access, and said local CPU has the lower priority of such access.

24. An adapter according to claim 21 wherein said system interface device contains a memory-mapped I/O channel by which said system CPU accesses said local memory to transfer command and status information, and contains a direct memory access channel by which data is transferred between the system memory and the local memory under control of the system interface device after initiation of the transfer by the system CPU or the local CPU; wherein said data communications interface device includes a direct memory access channel by which data is transferred between said signal path and said local memory under control of the data communication interface device after initiation of the transfer by the local CPU or the data communications interface device; and wherein said programmable processor device includes bus arbitration means to control access to said local bus, and said data communications interface device has highest priority of such access, said system interface device has the next higher priority of such access, and said local CPU has the lower priority of such access.

25. A digital data communications system comprising:

a) a signal path,

b) a plurality of stations connected to said signal path, each station receiving digital data from the path and transmitting digital data to said path, each said station comprising:

i) a main processor containing a main CPU, a main memory, and having a system bus interconnecting said main CPU, and main memory;

ii) a communications processor containing a local CPU, a read-only memory, and a local read-write memory; said communications processor having a local multiplexed address/data bus and a local control bus interconnecting said local CPU, read-only memory, and local read/write memory;

iii) system interface means connecting said system bus to said local address/data bus and said local control bus whereby said main CPU initiates direct memory access to said local read/write memory and said local CPU initiates direct memory access to said main memory, each said direct memory access being under control of said system interface means,

iv) transmit/receive handler means having receive input means coupled to said signal path and to a receive buffer memory, and having a transmit output coupled to said signal path and to a transmit buffer memory; the transmit/receive handler having control means responsive to receipt of data from said signal path at said receive input; and address and data bus means in said transmit/receive handler means connected to transfer data between said transmit and receive buffer memories and to said local bus means, and means responsive to initiation by said transmit/receive control means to directly access said local read/write memory for writing received data from the receive buffer memory to the local read/write memory and reading transmit data from the local read/write memory to the transmit/receive bus buffer memory.

26. A system according to claim 25 wherein said signal path is a closed, one-way path, and each station receives data from an upstream direction in the path and transmits data to a downstream direction in the path.

27. A system according to claim 26 wherein said access to said signal path is controlled by a token included in the transmitted data and passed from station to station around the closed path.

28. A system according to claim 27 wherein data is transmitted on said signal path in bit-serial format, said receive input means includes serial-to-parallel conversion means, said transmit output means includes parallel-to-serial conversion means, and wherein said local bus and system bus each includes a parallel data bus.

29. A system according to claim 28 wherein a frame of a plurality of bytes of data to be transmitted is created in said main memory under control of said main CPU, and such frame is transferred by said first access means upon initiation by said main CPU via said system bus and said local bus into said local read/write memory, and subsequently such frame is transferred by said transmit output means under initiation by said transmit/receive control means via said local bus, and said data bus transmit buffer memory to said transmit output means.

30. A system according to claim 29 wherein said frames of data created in said main memory and transmitted on said signal path by said stations include a destination address identifying a particular one of the stations, and a source address identifying the origination station.

31. A system according to claim 30 wherein said local CPU executes instructions fetched from said local read-only memory via said local bus, and said main CPU executes instructions fetched from said main memory via said system bus.

32. A data communications adapter connecting a processor system to a data communications signal path; said processor system having a system CPU, a system memory, a system control bus, and a system address/data bus; said adapter comprising:

a) a programmable processor device having a local CPU, a local memory, and local address/data bus means connecting the local CPU and local memory; said local memory including read-only memory for storing program instructions executed by said local CPU and including read/write memory for temporarily storing message data;

b) a system interface device coupling said local address/data bus to said system address/data bus for transferring message data between said system memory and said local memory by direct memory access in both directions;

c) a transmit/receive handler device coupling said local bus means to said signal path for transferring data from said signal path to said local memory by direct memory access, and transferring data from said local memory to said signal path by direct memory access; the transmit/receive handler means including an address bus, a data bus, a receive buffer memory and a transmit buffer memory;

d) wherein said data communications interface device, said system interface device, and said local CPU all contend for control of said local address/data bus.

33. An adapter according to claim 32 wherein said system interface device contains a memory-mapped I/O channel by which said system CPU accesses said local memory to transfer command and status information, and contains a direct memory access channel by which data is transferred between the system memory and the local memory under control of the system interface device after initiation of the transfer by the system CPU or the local CPU.

34. An adapter according to claim 33 wherein said transmit/receive handler device includes a direct memory access channel by which data is transferred between said signal path and said local memory via said receive buffer memory and said data bus under control of the handler device after initiation of the transfer by the local CPU or by the handler device.

35. An adapter according to claim 33 wherein said programmable processor device includes bus arbitration means to control access to said local bus, and said transmit/receive handler device has highest priority of such access, said system interface device has the next higher priority of such access, and said local CPU has the lower priority of such access.

36. An adapter according to claim 33 wherein said system interface device contains a memory-mapped I/O channel by which said system CPU accesses said local memory to transfer command and status information, and contains a direct memory access channel by which data is transferred between the system memory and the local -memory under control of the system interface device after initiation of the transfer by the system CPU or the local CPU; wherein said transmit/receive handler device includes a direct memory access channel by which data is transferred between said signal path and said local memory via said receive data buffer and said data bus under control of the handler device after initiation of the transfer by the local CPU or by the handler device; and wherein said programmable processor device includes bus arbitration means to control access to said local bus, and said handler device has highest priority of such access, said system interface device has the next higher priority of such access, and said local CPU has the lower priority of such access.

0193305

1/2

Fig.1

STARTING DELIMITER

PHYSICAL CONTROL FIELD

ENDING DELIMITER

FREE TOKEN →

TIME →

Fig.1a

STARTING DELIMITER

DESTINATION ADDRESS

SOURCE ADDRESS

DATA

FRAME CHECK

ENDING DELIMITER

PHYSICAL CONTROL FIELD

ENDING PHYSICAL CONTROL FIELD

Fig.1b

Fig.2

HOST PROCESSOR SYSTEM

ADAPTER

SYSTEM INTERFACE CHIP

HOST CPU

MAIN MEMORY

PERIPHERAL I/O

LOCAL CPU

TIMER

BUS ARBITER

LOCAL RAM

LOCAL ROM

FIFO

FIFO

DATA

ADDRESS

2/2

0193305